# EUROPEAN PATENT APPLICATION

(11) **EP 4 738 323 A1**
(43) Date of publication of application: **06.05.2026**
(21) Application number: 23943163.8
(22) Date of filing: 30.08.2023
(51) Int. Cl.: G09G 3/20, G01M 11/00

(54) **ON SCREEN DISPLAY METHOD AND APPARATUS FOR VEHICLE-MOUNTED SYSTEM, AND CHIP AND TERMINAL**

(30) Priority: 27.06.2023 CN 202310763562
(71) Applicant: Chipone Technology (Beijing) Co., Ltd., Beijing 100176 (CN)
(72) Inventor: LIN, ChihYing, Beijing 100176 (CN); CHEN, Yen Hsun, Beijing 100176 (CN)
(74) Representative: Bals & Vogel Patentanwälte PartGmbB
(86) International application number: PCT/CN2023/115856
(87) International publication number: WO 2025/000679

(57) **Abstract**

The present disclosure provides a screen display method and apparatus for an in-vehicle system, a chip, and a terminal. The screen display method comprises: detecting state parameters of a plurality of screens respectively to determine whether any of the plurality of screens is in an abnormal state; when determining that a screen is in an abnormal state, initiating defective-pixel detection of the screen to scan and determine whether the abnormal region of the screen displays normally; when the abnormal region cannot normally display, displaying the content corresponding to the abnormal region in a normal display region of the screen. Thus, when there exists a screen having an abnormal region in an in-vehicle system in which multiple screens perform collaborative operation, it is possible to rapidly and in real time determine whether the abnormal region can be normally displayed, and, for an abnormal region of a screen that cannot be normally displayed, to cause the content corresponding to the abnormal region to be clearly and completely displayed through multi-screen collaboration, thereby preventing a damaged screen from affecting normal human-machine interaction operations and thus improving the user experience and driving safety before repair.

## Description

This application claims priority to Chinese invention application No. 2023107635620, filed on June 27, 2023, titled "SCREEN DISPLAY METHOD AND APPARATUS FOR IN-VEHICLE SYSTEM, CHIP, AND TERMINAL," and incorporates by reference the entire specification, claims, drawings, and abstract of the aforementioned Chinese invention application into this application.

### TECHNICAL FIELD

The present disclosure relates to the field of display technology, and more particularly to a screen display method and apparatus for an in-vehicle system, a chip, and a terminal.

### BACKGROUND

With the increasing popularity of automobiles, more and more vehicles have entered households, but this has also brought about safety concerns related to automobiles. An automotive instrument panel serves as the human-machine interface between the driver and the vehicle, providing essential information such as vehicle operating parameters, faults, mileage, and other data, and is an indispensable component of every vehicle.

An automotive instrument panel includes an external display screen and internal circuitry. In related technologies, automotive instrument panels typically incorporate a central processing unit (CPU) in the circuitry to control display functions, with the CPU coupled to the display screen to drive the display of vehicle operating parameters, fault information, mileage, and other data.

In existing technologies, an On-Screen Display (OSD) module is usually integrated within the in-vehicle display screen. Meanwhile, the vehicle cockpit control module is data-coupled to the in-vehicle display screen, transmitting various driving data such as driving data and entertainment data to the OSD module of the in-vehicle display screen. Under such an architecture, the in-vehicle cockpit control module and the OSD module operate under the same control logic. If either the OSD module or the cockpit control module (the CPU responsible for display control) fails, the entire in-vehicle display system will be unable to function properly.

During driving, a black screen on the instrument panel display can affect the driver's ability to operate the vehicle. Additionally, display screens often suffer from localized damage during use, especially under external forces, leading to issues such as blackouts, blurred display, color deficiency, flickering, and jittering around the damaged area. These issues severely impact the display quality. Even when only a small area is damaged, although it affects content display, users typically do not immediately replace or repair the screen due to high costs or situational constraints (e.g., while driving). As a result, users may continue using the vehicle with a damaged screen for some time. A damaged screen affects normal human-machine interaction operations, leading to reduced driving safety and potentially causing traffic accidents.

Therefore, how to enable a terminal to clearly and completely display the corresponding content in areas affected by screen damage and/or contamination, thereby enhancing user experience, remains an unresolved issue.

### SUMMARY OF THE DISCLOSURE

To address the aforementioned technical problems, the present disclosure provides a screen display method and apparatus for an in-vehicle system, a chip, and a terminal, which enable a terminal to clearly and completely display corresponding content in affected areas through multi-screen collaboration when the screen is damaged and/or contaminated, thereby improving user experience and driving safety before repair.

In one aspect, the present disclosure provides a screen display method for an in-vehicle system, the in-vehicle system being used to achieve collaborative operations among a plurality of in-vehicle screens, wherein the screen display method comprises:
detecting state parameters of the plurality of screens respectively to determine whether any of the plurality of screens is in an abnormal state;
when determining that a screen is in the abnormal state, initiating defective-pixel detection of the screen to scan and determine whether content display in an abnormal region of the screen is normal;
when the determined result indicates that the abnormal region cannot normally display, displaying the content corresponding to the abnormal region in a normal display region of a screen,
the normal display region of the screen comprises a normal display region of the screen that is currently in the abnormal state and/or a display region of a screen that is not in an abnormal state.

Optionally, the state parameters at least comprise: a detection feedback signal of a gate-driver circuit, a detection feedback signal of panel damage/contamination, and a detection feedback signal of touch short/open circuit.

Optionally, the abnormal state comprises: the screen being in a damaged state or a contaminated state,
and the step of initiating defective-pixel detection of the screen to scan and determine whether content display in the abnormal region of the screen is normal when determining that a screen is in the abnormal state comprises:
determining the abnormal region of the screen according to the defective-pixel detection of the screen;
determining that the abnormal region cannot normally display by judging that a state of the abnormal region is a contaminated state.

Optionally, the step of initiating defective-pixel detection of the screen to scan and determine whether the content display in the abnormal region of the screen is normal when determining that a screen is in the abnormal state further comprises:
determining the abnormal region of the screen according to the defective-pixel detection of the screen;
determining whether the abnormal region can normally display according to the detection feedback signal of the gate-driver circuit, after judging that a state of the abnormal region is a damaged state; and
when determining that the abnormal region in the damaged state can normally display, displaying the content corresponding to the abnormal region at the original position of the current screen, or moving the content to be displayed to a normal display region of the current screen for display, or moving the content to be displayed to a display region of a screen without contamination for display.

Optionally, the step of displaying the content corresponding to the abnormal region in the normal display region of the screen when the determined result indicates that the abnormal region cannot normally display comprises:
determining the content corresponding to the abnormal region of the screen;
determining a size of a blank region in the normal display region of the screen in which no active content is displayed;
when determining that the blank region is larger than or equal to the abnormal region, placing and displaying the content to be displayed in the blank region; otherwise, adjusting the content to be displayed until it fits the size of the blank region and can be clearly displayed, and then placing and displaying it in the blank region.

Optionally, the step of displaying the content corresponding to the abnormal region in the normal display region of the screen when the determined result indicates that the abnormal region cannot normally display further comprises:
determining the content corresponding to the abnormal region of the screen;
determining a size of a blank region in the normal display region of the screen in which no active content is displayed;
when determining that the blank region is smaller than the abnormal region, adjusting the transparency of the content to be displayed until it fits the size of the blank region and can be clearly displayed, and then placing and displaying it in the blank region.

Optionally, the step of displaying the content corresponding to the abnormal region in the normal display region of the screen when the determined result indicates that the abnormal region cannot normally display further comprises:
determining the content corresponding to the abnormal region of the screen;
determining a size of a blank region in the normal display region of the screen in which no active content is displayed;
when determining that the blank region is smaller than the abnormal region, adjusting the size of the normal display region until the content to be displayed fits the normal display region and the content is clearly displayed without overlap, and placing and displaying the content to be displayed in the blank region.

In another aspect, the present disclosure further provides a screen display apparatus for an in-vehicle system, the in-vehicle system being used to achieve collaborative operations among a plurality of in-vehicle screens, wherein the screen display apparatus comprises:
a detection module configured to detect state parameters of the plurality of screens respectively in real time so as to determine whether any of the plurality of screens is in an abnormal state;
a scanning module configured to, when determining that a screen is in the abnormal state, initiate defective-pixel detection of the screen to scan and determine whether content display in an abnormal region of the screen is normal;
a control module configured to, when the determined result indicates that the abnormal region cannot normally display, display the content corresponding to the abnormal region in a normal display region of the screen,
wherein the control module is coupled respectively to the plurality of screens so as to control collaborative operations among the plurality of screens, and the normal display region of the screen comprises a normal display region of the screen that is currently in the abnormal state and/or a display region of a screen not in the abnormal state.

Optionally, the abnormal state comprises: the screen being in a damaged state or a contaminated state,
and the scanning module is further configured to:
determine the abnormal region of the screen according to the defective-pixel detection of the screen;
judge whether the abnormal region is in a contaminated state or a damaged state, and determine whether the abnormal region can normally display.

In another aspect, the present disclosure further provides a chip configured to form a display device together with a display panel module, wherein the chip comprises:
the screen display apparatus for an in-vehicle system according to any one of the preceding embodiments,
and the display panel module comprises a plurality of independently displayed screens.

Optionally, the chip is any one selected from the group consisting of a display-driver chip and a touch-and-display driver-integrated chip.

Optionally, the display panel is any one selected from the group consisting of a liquid crystal display panel, an OLED display panel, an LED display panel, a QLED display panel, a Mini-LED display panel, and a Micro-LED display panel.

In another aspect, the present disclosure further provides a terminal, wherein the terminal comprises: a display device, the display device comprising a display panel module and the chip according to any one of the preceding embodiments.

The beneficial effects of the present invention are: according to the screen display method and apparatus for an in-vehicle system, chip, and terminal provided by the present disclosure, wherein the in-vehicle system is used to achieve collaborative operations among a plurality of in-vehicle screens, the screen display method comprises: detecting state parameters of the plurality of screens respectively to determine whether any of the plurality of screens is in an abnormal state; when determining that a screen is in the abnormal state, initiating defective-pixel detection of the screen to scan and determine whether content display in an abnormal region of the screen is normal; when the determined result indicates that the abnormal region cannot normally display, displaying the content corresponding to the abnormal region in a normal display region of a screen. Thus, when there exists a screen having an abnormal region in an in-vehicle system in which multiple screens perform collaborative operation, it is possible to rapidly and in real time determine whether the abnormal region can be normally displayed, and, for an abnormal region of a screen that cannot be normally displayed, to cause the content corresponding to the abnormal region to be clearly and completely displayed through multi-screen collaboration, thereby preventing a damaged screen from affecting normal human-machine interaction operations and thus improving the user experience and driving safety before repair.

### BRIEF DESCRIPTION OF THE DRAWINGS

Through the following description of embodiments of the present disclosure with reference to the accompanying drawings, the above and other objects, features, and advantages of the present disclosure will become more apparent.
FIG. 1 schematically illustrates a structure of a multi-screen control in-vehicle system in the related art;
FIG. 2 schematically illustrates a flowchart of a screen display method for an in-vehicle system according to an embodiment of the present disclosure;
FIG. 3 schematically illustrates an application model of the screen display method shown in FIG. 2 in one implementation;
FIG. 4a to FIG. 4c respectively schematically illustrate various state parameters detected in the screen display method shown in FIG. 2;
FIG. 5 schematically illustrates a distribution of detected abnormal regions and normal display regions in the model shown in FIG. 3;
FIG. 6a and FIG. 6b respectively schematically illustrate execution results of the screen display method shown in FIG. 2 in different implementations;
FIG. 7 schematically illustrates a structure of a screen display apparatus for an in-vehicle system according to an embodiment of the present disclosure.

### DETAILED DESCRIPTION

For a better understanding of the present disclosure, the present disclosure will be described in greater detail below with reference to the accompanying drawings. The drawings illustrate preferred embodiments of the present disclosure. However, the present disclosure can be implemented in various different forms and is not limited to the embodiments described herein. On the contrary, these embodiments are provided to make the disclosure more thorough and comprehensive.

Unless otherwise defined, all technical and scientific terms used herein have the same meaning as commonly understood by one of ordinary skill in the art to which the present disclosure belongs. The terms used in the description of the present disclosure are for the purpose of describing particular embodiments only and are not intended to limit the present disclosure.

Below, the present disclosure will be described in detail with reference to the drawings.

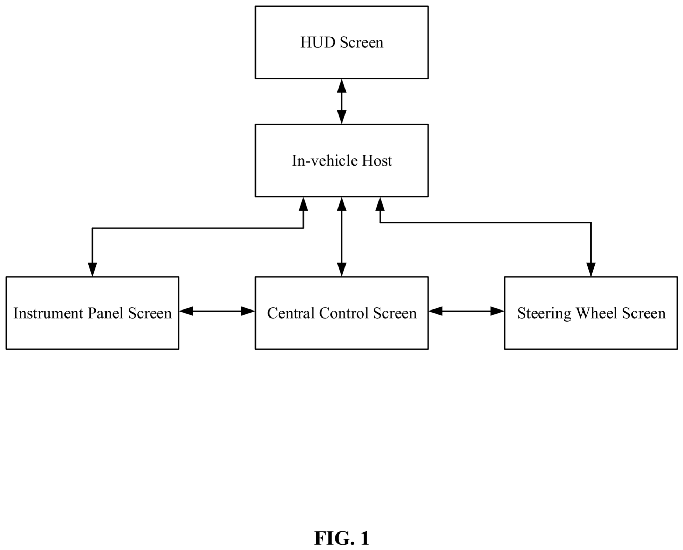

FIG. 1 schematically illustrates a structure of a multi-screen control in-vehicle system in the related art.

Referring to FIG. 1, a multi-screen control in-vehicle system commonly includes: an in-vehicle host, a steering wheel screen, an instrument panel screen, a HUD screen (an abbreviation for head-up display, a heads-up display device), and a central control screen. The in-vehicle host is the core component of the in-vehicle audio-visual system, installed in the vehicle cockpit, with the primary function of playing audio sources. In implementing a multi-screen control in-vehicle system, the first step is to confirm that the steering wheel screen, instrument panel screen, HUD screen, and central control screen are respectively coupled to the in-vehicle host. Specifically, the steering wheel screen, instrument panel screen, HUD screen, and central control screen may be coupled to the in-vehicle host via low-voltage differential signaling harnesses, allowing content from the screens (i.e., touch events) to be sent to the in-vehicle host, enabling touch event conversion within the in-vehicle host and aggregation onto an event bus, so that event sources from the steering wheel screen, HUD screen, and instrument panel screen, as well as event targets from the central control screen, are aggregated onto the event bus within the in-vehicle host, ultimately allowing events to be displayed respectively on the steering wheel screen, HUD screen, instrument panel screen, and central control screen.

With continuous technological advancements, the functions achievable by in-vehicle hosts are gradually increasing. Each vehicle model and function differs, so each vehicle has a different in-vehicle host. Currently, the mainboard is fixed at the bottom of the housing, with a chip module mounted on the mainboard. Besides the chip module, other various components are arranged on the mainboard, with a relatively universal layout. In upgrading existing in-vehicle host functions, only the chip module needs to be replaced.

The central control screen is located at the front of the vehicle, to the right front of the driver. The central control screen is almost a standard feature in modern cars. Mainstream screen schemes can be roughly divided into three types: coupled screens, flat screens, and vertical screens. Some models even feature triple screens or linear screens, and some vehicles have eliminated the instrument panel, retaining only the central control screen. It is installed on the center console of the in-vehicle navigation vehicle to realize functions such as controlling audio-video signal display, assisted driving, communication, and navigation.

The automotive instrument panel screen consists of various gauges, indicators, especially driver warning light alarms, providing drivers with required vehicle operating parameter information.

The automotive HUD screen uses the principle of optical reflection to project important system information such as navigation and Bluetooth calls onto the front windshield, and it can also display in color. During vehicle operation, using this function allows the driver to avoid specifically looking down at the instrument panel for vehicle information, thus ensuring the driver can maintain focus.

Steering wheel screens are featured in many concept cars, with the latest Li Auto L9 eliminating the instrument panel and adding a HUD and steering wheel screen. Some designs use the steering wheel screen as an information reading device.

In addition, to accommodate different preferences, some vehicles include: an intelligent rearview mirror screen installed at the rearview mirror of the in-vehicle navigation vehicle to realize synchronized display of audio-video signals from the central control screen module, driving record, one-touch rescue, and network communication functions; a headrest screen installed on the back of the front seat headrests of the in-vehicle navigation vehicle to realize synchronized display of audio-video signals from the central control screen module, latitude and longitude information display, and vehicle speed information display functions. The in-vehicle air conditioning screen is not a standard feature. Traditional vehicle models use physical buttons for control, later evolving into a combination of a screen and physical buttons, and more recently into dedicated air-conditioning screens that replace physical buttons. Most new-energy vehicles integrate air-conditioning settings into the central control screen. The foregoing is not an exhaustive list. Only the above four types of displays are outlined to illustrate the in-vehicle system, with the aim of providing a screen display method applicable to multi-screen control scenarios when a screen abnormality occurs.

As described above, during driving, a blackout of the display screen of the vehicle instrument panel may affect the driver's operation. In addition, during use, display screens may frequently suffer localized damage, with the damaged areas exhibiting issues such as blacked-out regions, blurred images, color loss, or flickering, all of which degrade the display performance and create safety hazards. Moreover, when only a small portion of the screen is damaged, although the displayed content is affected, users typically do not immediately replace or repair the screen due to its high cost or situational constraints (e.g., while driving). As a result, users may continue to use the vehicle for a period of time despite a damaged screen, and the damaged screen may interfere with normal human-machine interaction, thereby compromising driving safety and even potentially causing traffic accidents. In view of the foregoing, the embodiments of the present disclosure propose a screen display method for an in-vehicle system. Through this method, when a screen in an in-vehicle system supporting multi-screen collaboration has an abnormal region, the content to be displayed in that abnormal region can be clearly and completely presented via multi-screen collaboration, thereby avoiding content loss or incomplete display caused by the damaged screen from affecting normal human-machine interaction. As a result, the user experience prior to repair and the driving safety are improved.

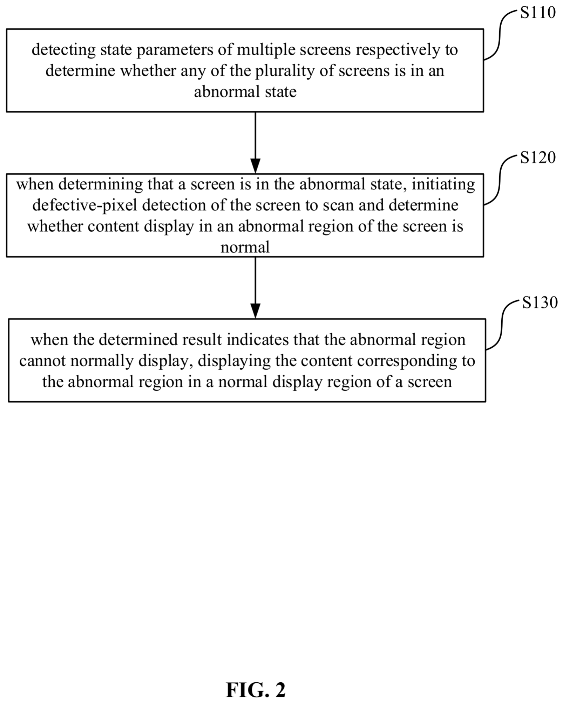

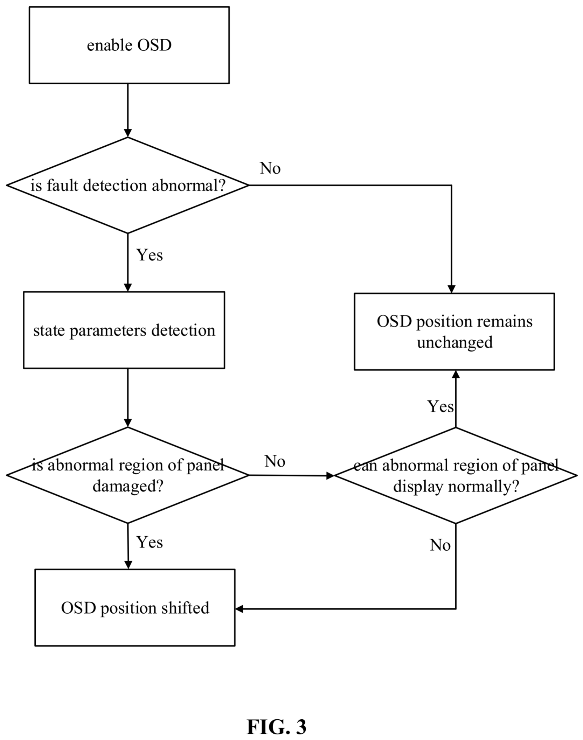

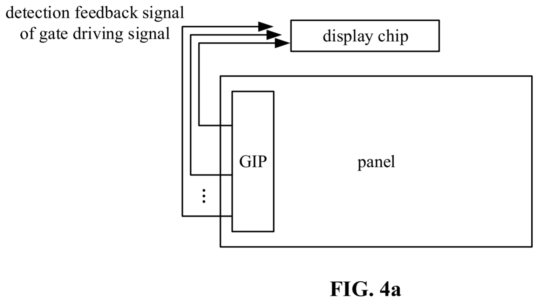

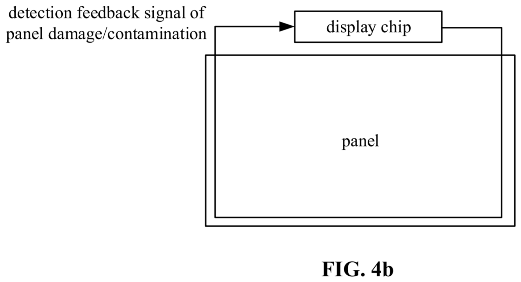

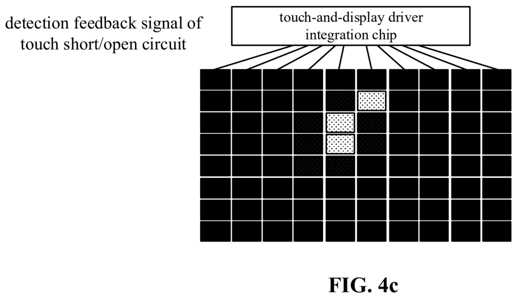

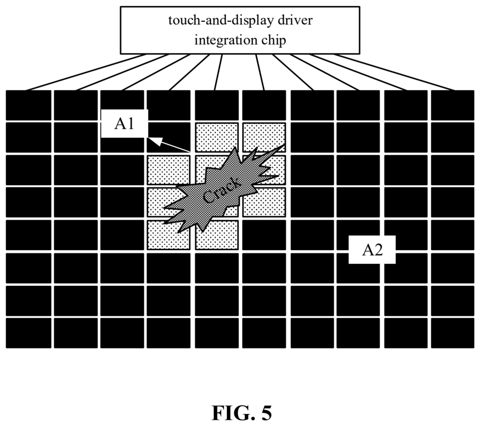

FIG. 2 schematically illustrates a flowchart of a screen display method for an in-vehicle system according to an embodiment of the present disclosure, FIG. 3 schematically illustrates an application model of the screen display method shown in FIG. 2 in one implementation, FIG. 4a to FIG. 4c respectively schematically illustrate various state parameters detected in the screen display method shown in FIG. 2, and FIG. 5 schematically illustrates a distribution of detected abnormal regions and normal display regions in the model shown in FIG. 3.

Referring to FIG. 2 and FIG. 3, an embodiment of the present disclosure provides a screen display method for an in-vehicle system, the in-vehicle system being used to achieve collaborative operations among independent product modules of multiple in-vehicle screens (such as the independent product modules of the steering wheel screen, instrument panel screen, HUD screen, and central control screen as shown in FIG. 1, where product modules, for example, include display screens and control circuits coupled to control the display screens, etc., hereinafter the same), wherein the screen display method comprises: S110: detecting state parameters of multiple screens respectively to determine whether any of the plurality of screens is in an abnormal state.

In step S110, the state parameters at least comprise: a detection feedback signal of a gate-driver circuit, a detection feedback signal of panel damage/contamination, and a detection feedback signal of touch short/open circuit, as shown in FIG. 4a to FIG. 4c. The abnormal state comprises: the screen being in a damaged state or a contaminated state.

S120: when determining that a screen is in the abnormal state, initiating defective-pixel detection of the screen to scan and determine whether content display in an abnormal region of the screen is normal.

In some embodiments, the step of initiating defective-pixel detection of the screen to scan and determine whether content display in the abnormal region of the screen is normal when determining that a screen is in the abnormal state may include:
determining the abnormal region A1 of the screen according to the defective-pixel detection of the screen, as shown in FIG. 5, where the region other than the abnormal region A1 on the screen is the normal display region A2;
judging that the state of the abnormal region is a contaminated state, and determining that the abnormal region cannot normally display.

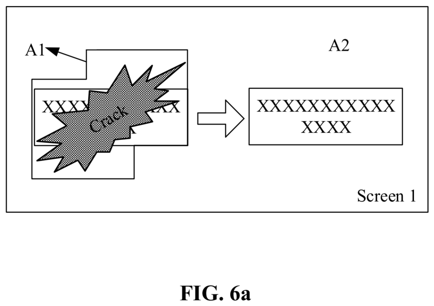

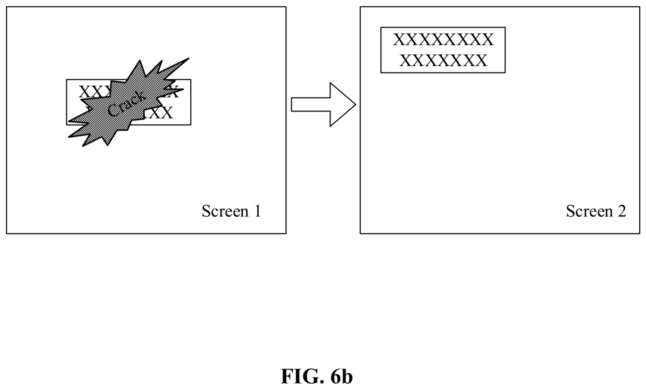

In other embodiments, the step of initiating defective-pixel detection of the screen to scan and determine whether content display in the abnormal region of the screen is normal when determining that a screen is in the abnormal state may further include:
determining the abnormal region of the screen according to the defective-pixel detection of the screen;
judging that the state of the abnormal region is a damaged state, and then determining whether the abnormal region can normally display according to the detection feedback signal of the gate-driver circuit;
when determining that the abnormal region in the damaged state can normally display, displaying the content corresponding to the abnormal region at the original position on the current screen, or moving the content to be displayed to the normal display region of the current screen for display, as shown in FIG. 6a, or moving the content to be displayed to the display region of a screen without contamination for display, as shown in FIG. 6b.

S130: when the determined result indicates that the abnormal region cannot normally display, displaying the content corresponding to the abnormal region in a normal display region of a screen.

In step S130, the normal display region of the screen comprises a normal display region of the screen that is currently in the abnormal state and/or a display region of a screen not in the abnormal state.

In some embodiments, the step of displaying the content corresponding to the abnormal region in the normal display region of the screen when the determined result indicates that the abnormal region cannot normally display may include:
determining the content corresponding to the abnormal region of the screen;
determining a size of a blank region in the normal display region of the screen in which no active content is displayed;
when determining that the blank region is greater than or equal to the abnormal region, placing and displaying the content to be displayed in the blank region; otherwise, adjusting the content to be displayed until it fits the size of the blank region and can be clearly displayed, and then placing and displaying it in the blank region.

In some embodiments, the step of displaying the content corresponding to the abnormal region in the normal display region of the screen when the determined result indicates that the abnormal region cannot normally display may further include:
determining the content corresponding to the abnormal region of the screen;
determining a size of a blank region in the normal display region of the screen in which no active content is displayed;
when determining that the blank region is smaller than the abnormal region, adjusting the transparency of the content to be displayed until it fits the size of the blank region and can be clearly displayed, and then placing and displaying it in the blank region.

In some embodiments, the step of displaying the content corresponding to the abnormal region in the normal display region of the screen when the determined result indicates that the abnormal region cannot normally display may further include:
determining the content corresponding to the abnormal region of the screen;
determining a size of a blank region in the normal display region of the screen in which no active content is displayed;
when determining that the blank region is smaller than the abnormal region, adjusting the size of the normal display region until the content to be displayed fits the normal display region and the content is clearly displayed without overlap, and placing and displaying the content to be displayed in the blank region.

In this embodiment, by real-time detection of state parameters of each screen in the in-vehicle system, it is determined whether any screen is in an abnormal state, i.e., whether it is in a damaged and/or contaminated state. For example, by simulating user touch operations, it is detected whether there are unresponsive pixels on the in-vehicle multi-screen (i.e., touch, of course, the screen being operated must be a touch screen; for non-touch screens, detection of damage/contamination and gate-driver circuit detection are combined according to actual conditions, hereinafter the same). If unresponsive pixels exist, it can be determined that the in-vehicle multi-screen has a screen in a damaged and/or contaminated state, thereby initiating defective-pixel detection to determine the abnormal region of the screen. Then, based on the detection response of touch short/open circuit in the abnormal region (for non-touch screens, only panel damage/contamination detection and gate-driver signal detection are available, while touch screens have additional touch detection besides the above two), the display method of the content corresponding to the abnormal region is determined, including single-screen content migration display or multi-screen collaborative migration display. Thus, it is avoided that part of the content cannot be clearly displayed under conditions of screen damage and/or contamination in the in-vehicle multi-screen, causing inconvenience to users, and preventing a damaged screen from affecting normal human-machine interaction operations, thereby improving user experience and driving safety before repair.

In one implementation scenario, the On-Screen Display (OSD) menu adjustment method can display special graphics or text to alert users in emergencies. However, if the OSD display area is damaged, the OSD may not be able to display normally or completely, resulting in missing or omitted information.

Referring to FIG. 3, OSD is first enabled, and fault detection is performed on the statuses of various preset hardware components and the connection statuses therebetween, as well as on their state parameters, so as to eliminate all factors that may interfere with the display of important content and thereby enhance driving safety.

When no abnormality is detected through the fault detection and state detection, OSD display is normally performed on each screen, and the display positions of all preset information on the respective screens remain unchanged. When an abnormality is found in the fault detection or state detection, the detected state parameters are analyzed. First, when it is determined that a screen is in the abnormal state, defective-pixel detection is initiated for the screen to scan and identify the abnormal region, and to determine whether the panel is damaged in the abnormal region. If the abnormal region of the current screen is determined to be in a damaged state, such that the abnormal region cannot normally display content, the OSD position is shifted, specifically by displaying the content to be displayed in the abnormal region within the normal display region of the screen. When the abnormal region of the current screen is determined to be in an undamaged state (i.e., contaminated or damaged), the system further determines whether the abnormal region can display normally. If the detection feedback signal of the gate-driving circuit is normal, this indicates that the abnormal region merely has surface contamination or cracks without damage to the driving circuitry or pixel units. In such cases, for cracks that do not damage the driving circuitry or pixel units, the OSD position remains unchanged and the image is displayed normally; for surface contamination, the contamination may be removed and the OSD position likewise remains unchanged for image display. If the detection feedback signal of the gate-driving circuit is abnormal, or the contamination cannot be removed and affects the display of important information, the OSD position corresponding to the abnormal region is shifted, such that the content to be displayed is moved to a normal display region of the current screen or to a display region of another screen that is not contaminated. The display is not limited to the current screen and may be transferred across screens of the in-vehicle system. The in-vehicle host (driving computer) may uniformly configure and implement display across all vehicle screens. In this way, when the screen is damaged and/or contaminated, multi-screen collaboration enables clear and complete presentation of the content corresponding to the abnormal region, thereby improving the user experience and driving safety prior to screen repair.

In addition, when an OSD abnormality is detected, besides shifting the content corresponding to the abnormal region to a normal display region of the current screen or to another normal screen, alerts may also be issued through various forms such as sound, LEDs, or warning characters or images on a HUD display, thereby further enhancing driving safety.

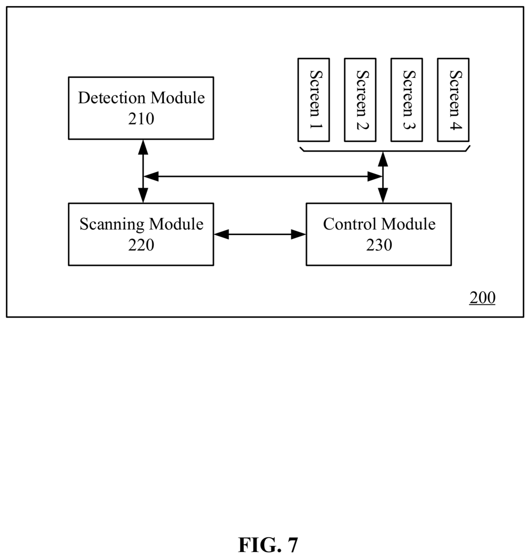

FIG. 7 schematically illustrates a structure of a screen display apparatus for an in-vehicle system according to an embodiment of the present disclosure.

In another aspect, an embodiment of the present disclosure further provides a screen display apparatus for an in-vehicle system, the in-vehicle system being used to achieve collaborative operations among independent product modules of multiple in-vehicle screens. As shown in FIG. 7, the screen display apparatus 200 comprises: a detection module 210, a scanning module 220, and a control module 230.

Among them, the detection module 210 is configured to detect state parameters of the plurality of screens (in this embodiment, screen 1, screen 2, screen 3, and screen 4 are used to represent multi-screen collaboration, but the number is not intended to limit the present disclosure, same as above) in real time respectively, so as to determine whether any of the plurality of screens is in an abnormal state; the scanning module 220 is configured to, when determining that a screen is in the abnormal state, initiate defective-pixel detection of the screen to scan and determine whether content display in an abnormal region of the screen is normal; the control module 230 is configured to, when the determined result indicates that the abnormal region cannot normally display, display the content corresponding to the abnormal region in a normal display region of the screen. The control module 230 is respectively coupled to independent product modules of the plurality of screens (screen 1, screen 2, screen 3, and screen 4) to control collaborative operations among the plurality of screens. The normal display region of the screen comprises a normal display region of the screen that is currently in the abnormal state and/or a display region of a screen not in the abnormal state.

In some embodiments, the abnormal state comprises: the screen being in a damaged state or a contaminated state,
and the scanning module 220 is further configured to:
determine the abnormal region of the screen according to the defective-pixel detection of the screen;
judge whether the abnormal region is in a contaminated state or a damaged state, and determine whether the abnormal region can normally display.

In another aspect, an embodiment of the present disclosure further provides a chip (not shown), configured to form a display device together with a display panel module, wherein the chip comprises:
the screen display apparatus 200 for an in-vehicle system as described in any of the foregoing embodiments,
and the display panel module comprises a plurality of independently displayed screens (in this embodiment, screen 1, screen 2, screen 3, and screen 4 are used to represent multi-screen collaboration, but the number is not intended to limit this embodiment).

In the present embodiment, the chip is selected from the group consisting of a display driver chip and a touch-and-display driver integration (TDDI) chip. In this embodiment, the display driver chip is configured to have a detection function for identifying contaminated and/or damaged regions of the display panel (including multiple screens), thereby enabling the display driver chip to determine, through detection, whether the display panel contains any defective regions. If the detection indicates that the display panel contains a contaminated and/or damaged region, the feedback signal is analyzed according to the method described in the foregoing embodiments to determine whether the content to be displayed in that region can be normally displayed. If not, the content to be displayed is transferred to a normal display region of the current screen, or to a normal display region of another screen.

In this embodiment, the display panel is any one selected from the group consisting of a liquid crystal display panel, an OLED display panel, an LED display panel, a QLED display panel, a Mini-LED display panel, and a Micro-LED display panel.

In another aspect, an embodiment of the present disclosure further provides a terminal, for example, an in-vehicle system with multi-screen control to achieve multi-screen collaborative operations, wherein the terminal comprises: a display device, and the display device comprises a display panel module and the chip as described in any of the foregoing embodiments.

In feasible embodiments, the terminal is one selected from the group consisting of an electronic instrument panel, an in-vehicle entertainment system, a flat display device, a curved display device, a smart TV, a smartphone, a smartwatch, a smart band, a head-mounted display device, a tablet computer, a laptop computer, an all-in-one computer, a financial transaction device, an automated teller machine, an interactive information service station (KIOSK), an electronic device serving as a point-of-sale (POS) terminal, an in-vehicle entertainment system, and an access control device.

In summary, according to the screen display method and apparatus for an in-vehicle system, chip, and terminal provided by embodiments of the present disclosure, wherein the in-vehicle system is used to achieve collaborative operations among independent product modules of multiple in-vehicle screens, the screen display method comprises: detecting state parameters of the plurality of screens respectively to determine whether any of the plurality of screens is in an abnormal state; when determining that a screen is in the abnormal state, initiating defective-pixel detection of the screen to scan and determine whether content display in an abnormal region of the screen is normal; when the determined result indicates that the abnormal region cannot normally display, displaying the content corresponding to the abnormal region in a normal display region of a screen. Thus, when there exists a screen having an abnormal region in an in-vehicle system in which multiple screens perform collaborative operation, it is possible to rapidly and in real time determine whether the abnormal region can be normally displayed, and, for an abnormal region of a screen that cannot be normally displayed, to cause the content corresponding to the abnormal region to be clearly and completely displayed through multi-screen collaboration, thereby preventing a damaged screen from affecting normal human-machine interaction operations and thus improving the user experience and driving safety before repair.

It should be noted that in the description of the present disclosure, terms such as "above," "below," "inside," etc., indicating orientation or positional relationships, are used solely for convenience in describing the present disclosure and simplifying the description, and do not imply or suggest that the components or elements referred to must have a specific orientation, be constructed in a specific orientation, or operate in a specific manner; therefore, they should not be construed as limiting the present disclosure.

Furthermore, as used herein, the terms "comprising," "including," or any other variation are intended to cover non-exclusive inclusions, such that a process, method, article, or apparatus that comprises a list of elements not only includes those elements but also includes other elements not explicitly listed, or includes elements inherent to such a process, method, article, or apparatus. Without further limitations, an element defined by the phrase "comprising a..." does not exclude the presence of additional identical elements in a process, method, article, or apparatus that comprises the element.

Finally, it should be noted that: obviously, the above embodiments are merely examples provided for clearly illustrating the present disclosure and are not intended to limit the implementation methods. Those of ordinary skill in the art can make various other different modifications or variations based on the above description.

## Claims

1. A screen display method for an in-vehicle system, the in-vehicle system being used to achieve collaborative operations among a plurality of screens in the vehicle, wherein the screen display method comprises:
detecting state parameters of the plurality of screens respectively to determine whether any of the plurality of screens is in an abnormal state;
when determining that a screen is in the abnormal state, initiating defective-pixel detection of the screen to scan and determine whether content display in an abnormal region of the screen is normal;
when the determined result indicates that the abnormal region cannot normally display, displaying the content corresponding to the abnormal region in a normal display region of a screen,
the normal display region of the screen comprises a normal display region of the screen that is currently in the abnormal state and/or a display region of a screen that is not in an abnormal state.

2. The screen display method for an in-vehicle system according to claim 1, wherein the state parameters at least comprise: a detection feedback signal of a gate-driver circuit, a detection feedback signal of panel damage/contamination, and a detection feedback signal of touch short/open circuit.

3. The screen display method for an in-vehicle system according to claim 2, wherein the abnormal state comprises: the screen being in a damaged state or a contaminated state, and
the step of initiating defective-pixel detection of the screen to scan and determine whether content display in the abnormal region of the screen is normal when determining that a screen is in the abnormal state comprises:
determining the abnormal region of the screen according to the defective-pixel detection of the screen;
determining that the abnormal region cannot normally display by judging that a state of the abnormal region is a contaminated state.

4. The screen display method for an in-vehicle system according to claim 3, wherein the step of initiating defective-pixel detection of the screen to scan and determine whether the content display in the abnormal region of the screen is normal when determining that a screen is in the abnormal state further comprises:
determining the abnormal region of the screen according to the defective-pixel detection of the screen;
determining whether the abnormal region can normally display according to the detection feedback signal of the gate-driver circuit, after judging that a state of the abnormal region is a damaged state; and
when determining that the abnormal region in the damaged state can normally display, displaying the content corresponding to the abnormal region at the original position of the current screen, or moving the content to be displayed to a normal display region of the current screen for display, or moving the content to be displayed to a display region of a screen without contamination for display.

5. The screen display method for an in-vehicle system according to claim 4, wherein the step of displaying the content corresponding to the abnormal region in the normal display region of the screen when the determined result indicates that the abnormal region cannot normally display comprises:
determining the content corresponding to the abnormal region of the screen;
determining a size of a blank region in the normal display region of the screen in which no active content is displayed;
when determining that the blank region is larger than or equal to the abnormal region, placing and displaying the content to be displayed in the blank region; otherwise, adjusting the content to be displayed until it fits the size of the blank region and can be clearly displayed, and then placing and displaying it in the blank region.

6. The screen display method for an in-vehicle system according to claim 5, wherein the step of displaying the content corresponding to the abnormal region in the normal display region of the screen when the determined result indicates that the abnormal region cannot normally display further comprises:
determining the content corresponding to the abnormal region of the screen;
determining a size of a blank region in the normal display region of the screen in which no active content is displayed;
when determining that the blank region is smaller than the abnormal region, adjusting the transparency of the content to be displayed until it fits the size of the blank region and can be clearly displayed, and then placing and displaying it in the blank region.

7. The screen display method for an in-vehicle system according to claim 5, wherein the step of displaying the content corresponding to the abnormal region in the normal display region of the screen when the determined result indicates that the abnormal region cannot normally display further comprises:
determining the content corresponding to the abnormal region of the screen;
determining a size of a blank region in the normal display region of the screen in which no active content is displayed;
when determining that the blank region is smaller than the abnormal region, adjusting the size of the normal display region until the content to be displayed fits the normal display region and the content is clearly displayed without overlap, and placing and displaying the content to be displayed in the blank region.

8. A screen display apparatus for an in-vehicle system, the in-vehicle system being used to achieve collaborative operations among a plurality of in-vehicle screens, wherein the screen display apparatus comprises:
a detection module configured to detect state parameters of the plurality of screens respectively in real time so as to determine whether any of the plurality of screens is in an abnormal state;
a scanning module configured to, when determining that a screen is in the abnormal state, initiate defective-pixel detection of the screen to scan and determine whether content display in an abnormal region of the screen is normal;
a control module configured to, when the determined result indicates that the abnormal region cannot normally display, display the content corresponding to the abnormal region in a normal display region of the screen,
wherein the control module is coupled respectively to the plurality of screens so as to control collaborative operations among the plurality of screens, and the normal display region of the screen comprises a normal display region of the screen that is currently in the abnormal state and/or a display region of a screen not in the abnormal state.

9. The screen display apparatus for an in-vehicle system according to claim 8, wherein the abnormal state comprises: the screen being in a damaged state or a contaminated state, and
the scanning module is further configured to:
determine the abnormal region of the screen according to the defective-pixel detection of the screen;
judge whether the abnormal region is in a contaminated state or a damaged state, and determine whether the abnormal region can normally display.

10. A chip configured to form a display device together with a display panel module, wherein the chip comprises:
the screen display apparatus for an in-vehicle system according to any one of claims 8 to 9, and the display panel module comprises plurality of independently displayed screens.

11. The chip according to claim 10, wherein the chip is any one selected from the group consisting of a display-driver chip and a touch-and-display driver-integrated chip.

12. The chip according to claim 10, wherein the display panel is any one selected from the group consisting of a liquid crystal display panel, an OLED display panel, an LED display panel, a QLED display panel, a Mini-LED display panel, and a Micro-LED display panel.

13. A terminal comprising: a display device, the display device comprising a display panel module and the chip according to any one of claims 10 to 12.
